# EUROPÄISCHE PATENTANMELDUNG

(11) **EP 4 092 634 A1**
(43) Veröffentlichungstag der Anmeldung: **23.11.2022**
(21) Anmeldenummer: 22173180.5
(22) Anmeldetag: 13.05.2022
(51) Int. Cl.: G06V 20/58

(54) **FAHRZEUGSYSTEM ZUR FEHLERERKENNUNG IN EINEM UMFELDMODELL UND FAHRZEUG**

(30) Priorität: 19.05.2021 DE 102021205067
(71) Anmelder: ZF Friedrichshafen AG, 88046 Friedrichshafen (DE)
(72) Erfinder:
(74) Vertreter: ZF Friedrichshafen AG

(57) **Zusammenfassung**

Die Erfindung betrifft ein Fahrzeugsystem (1) zur Fehlererkennung in einem Umfeldmodell (7) eines Fahrzeugs umfassend: ein Sensorsystem (5) zur Generierung von Umfeldmodellen (7), ein Triggersystem, ein Ringpuffer (11), wobei das Fahrzeugsystem (1) dazu ausgebildet ist, rückwirkend ein Referenzumfeldmodell (9) anhand der über die vorab festgelegte Gedächtnislänge aufgenommenen Sensordaten zu generieren, wobei das Fahrzeugsystem (1) dazu ausgebildet ist, einen Vergleich zwischen dem zurückwirkenden Referenzumfeldmodell (9) und dem korrespondierenden zurückliegenden Umfeldmodell (7) durchzuführen.

## Beschreibung

Die Erfindung betrifft ein Fahrzeugsystem zur Fehlererkennung in einem Umfeldmodell eines Fahrzeugs. Ferner betrifft die Erfindung ein Fahrzeug und ein Verfahren.

Zur Erkennung von Objekten sowie deren Bewegungen werden insbesondere in autonomen Fahrzeugen eine Vielzahl von Sensoren eingesetzt. Diese können beispielsweise Kamerasensoren, Ultraschallsensoren, Lider- und Radarsensoren sein. Die Daten der Sensoren werden zumeist in ein sogenanntes Umfeldmodell zusammengeführt, zum Abbilden des Umfelds mitsamt der bewegten und unbewegten Objekte.

Sowohl durch die Funktionsweise der Sensoren als auch der Berechnung entstehen fehlerbehaftete bzw. ungenaue Umfeldmodelle.

Viele Fehler in dem zu testenden Umfeldmodell können jedoch nicht ohne den Vergleich gegen ein Referenzumfeldmodell als Solches erkannt werden.

Es ist daher eine Aufgabe der Erfindung Mittel zur Generierung eines verbesserten Umfeldmodells anzugeben.

Die Aufgabe wird gelöst durch ein Fahrzeugsystem mit den Merkmalen des Anspruchs 1. Ferner wird die Aufgabe gelöst durch ein Fahrzeug mit den Merkmalen des Anspruchs 14 und ein Verfahren mit den Merkmalen des Anspruchs 15. Vorteilhafte Weiterbildungen, welche einzeln oder in Kombination miteinander eingesetzt werden können, sind in den abhängigen Ansprüchen sowie in der Beschreibung angegeben.

Die Aufgabe wird gelöst durch ein Fahrzeugsystem zur Fehlererkennung in einem Umfeldmodell eines Fahrzeugs umfassend:
ein Sensorsystem zur Generierung von Umfeldmodellen durch das Fahrzeugsystem, anhand der von dem Sensorsystem aufgenommenen Sensordaten während der Fahrt des Fahrzeugs,
ein Triggersystem, welches konfiguriert ist, bei einem vorab definierten Ereignis ein Triggersignal auszulösen,
ein Ringpuffer, wobei das Fahrzeugsystem dazu ausgebildet ist, zumindest anhand des Sensorsystems über eine vorab festgelegte Gedächtnislänge die Sensordaten aufzunehmen, und die über die vorab festgelegte Gedächtnislänge aufgenommenen Sensordaten in dem Ringpuffer zu speichern,
wobei das Fahrzeugsystem dazu ausgebildet ist, rückwirkend ein Referenzumfeldmodell anhand der über die vorab festgelegte Gedächtnislänge aufgenommenen Sensordaten zu generieren, wobei bei der Generierung des Referenzumfeldmodells, die über die vorab festgelegte Gedächtnislänge aufgenommenen Sensordaten rückwirkend miteinfließen,
wobei das Fahrzeugsystem dazu ausgebildet ist, einen Vergleich zwischen dem zurückwirkenden Referenzumfeldmodell und dem korrespondierenden zurückliegenden Umfeldmodell durchzuführen, zur Feststellung von Wahrnehmungsfehlern in dem Umfeldmodell und wobei das Triggersystem dazu ausgebildet ist, ein Triggersignal zumindest bei einer Abweichung zwischen dem zurückwirkenden Referenzumfeldmodell und dem korrespondierenden zurückliegenden Umfeldmodell als Ereignis auszulösen.

Ein Ereignis kann zudem beispielsweise das Passieren einer stark frequentierten Kreuzung sein, wobei das Passieren mittels GPS-Daten ermittelt werden kann. Ferner kann bei Mitführen eines Sicherheitsfahrers ein Ereignis beispielsweise ein Eingriff zur Vermeidung eines Unfalls durch den Sicherheitsfahrer sein, oder beispielsweise ab einer gewissen Geschwindigkeit generell ein Triggersignal ausgelöst werden. Das Triggersystem registriert diese Ereignisse, wodurch das Triggersignal ausgelöst wird. Ferner ist eine beobachtete Abweichung zwischen Referenzumfeldmodell und zu testendem Umfeldmodell ebenfalls ein Ereignis.

Als Ringpuffer kann eine Warteschlange mit fester Speicherkapazität verstanden werden. Ein solcher Ringpuffer speichert Daten kontinuierlich in einem gewissen Zeitraum und überschreibt die Daten nach dem Ablaufen einer vorgegebenen Zeit wieder, um den Speicherplatz für neue Daten wieder freizugeben. Es werden für gewöhnlich immer die ältesten Inhalte überschrieben, wenn der Ringpuffer voll ist, um weitere Daten in den Ringpuffer ablegen zu können.

Das Sensorsystem kann beispielsweise mehrere Sensoren und unterschiedliche Sensorarten umfassen.

Das erfindungsgemäße Fahrzeugsystem schätzt ein Umfeldmodell online zum Bewerkstelligen einer autonomen oder teilautonomen Betriebsweise. Diese Schätzung basiert auf den aktuellen Sensordaten. Ferner kann diese Schätzung auf einer internen Historie (historische Sensordaten) für z.B. Objektnachführung/Trajektorienachführung basieren.

Bei dem erfindungsgemäßen Fahrzeugsystem werden die Sensordaten für eine vorab festgelegte Gedächtnislänge in dem Ringpuffer gespeichert. Dabei können die noch zur Berechnung des Umfeldmodells genutzten historischen Sensordaten ebenfalls gespeichert werden.

Das erfindungsgemäße Fahrzeugsystem hat zur Generierung des rückwirkenden Referenzumfeldmodells Zugriff auf alle Daten, welche in dem Ringpuffer gespeichert sind. Das bedeutet, dass das Fahrzeugsystem rückblickend ein Referenzumfeldmodell für den Zeitpunkt des Beginns der Gedächtnislänge erstellen kann.

Dieses ist erfindungsgemäß realitätsgetreuer als jenes Umfeldmodell, welches das Fahrzeugsystem zum Zeitpunkt des Beginns der Gedächtnislänge schätzt. In der während der Gedächtnislänge vergangenen Zeit, können so zum Beispiel Mehrdeutigkeiten und Unstimmigkeiten aufgelöst werden, die Dimensionen von teilweise vermessenen Hindernissen korrekter gemessen werden oder Klassenzuordnungen getroffen werden etc.

Das erfindungsgemäße Fahrzeugsystem ist ferner dazu ausgebildet, beispielsweise anhand einer Logik einen Abgleich/Vergleich zwischen dem so erstellten Umfeldmodell und dem Referenzumfeldmodell vorzunehmen, zur Feststellung von Wahrnehmungsfehler in dem Umfeldmodell.

Anhand der festgestellten Wahrnehmungsfehler kann somit das Umfeldmodell verbessert werden oder anhand nicht festgestellter Wahrnehmungsfehler das Umfeldmodell evaluiert und bestätigt werden.

In weiterer Ausgestaltung ist ein Zwischenspeicher vorgesehen, wobei das Fahrzeugsystem dazu ausgebildet ist, das generierte Umfeldmodell bis zur Feststellung oder Nicht-Feststellung eines Wahrnehmungsfehlers in dem Zwischenspeicher zwischenzuspeichern. Der Zwischenspeicher kann ebenfalls als Ringpuffer mit geringer Speichergröße ausgebildet sein, welche das generierte Umfeldmodell als auch beispielsweise die dazugehörigen historischen und aktuellen Daten zwischenspeichert bis das Fahrzeugsystem einen Vergleich des Referenzumfeldmodells mit dem Umfeldmodell durchgeführt hat. Dies erfordert durch eine "nur Zwischenspeicherung" eine geringere Speicherkapazität und nur wenig Bauplatz im Fahrzeug selber. Aktuelle Daten werden durch die Ausbildung als Zwischenspeicher nachgeschoben, wobei ältere, nicht mehr benötigte Daten, automatisch durch die Auswahl der Speichergröße gelöscht werden. Zudem ergeben sich durch eine solche Auswahl nur geringe Kosten.

Weiterhin vorzugsweise ist das Fahrzeugsystem dazu ausgebildet, zusätzlich die historischen Sensordaten, welche zur Erzeugung des Umfeldmodells benötigt werden, in dem Zwischenspeicher zu speichern und wobei das Fahrzeugsystem dazu ausgebildet ist, das Umfeldmodell anhand eines Generierungsalgorithmus zu generieren und das Fahrzeugsystem ferner dazu ausgebildet ist, die dem Generierungsalgorithmus zugrundeliegenden Algorithmenzustände in dem Zwischenspeicher zu speichern. Dadurch kann bei einem später festgestelltem Wahrnehmungsfehler besser nachvollzogen werden, welche Ursachen dem Wahrnehmungsfehler zugrunde liegen.

Dabei können als historische Daten diejenigen Sensordaten verstanden werden, welche beispielsweise zeitlich bis zu einer vordefinierten Dauer vor beispielsweise einem Triggersignal zur Erzeugung des Umfeldmodells aufgenommen wurden, oder welche zur Umfeldmodellierung benötigt werden (Objektnachverfolgung etc.).

Dabei können unter Algorithmenzustände diejenigen Parameter und Berechnungsschritte verstanden werden, welche das Fahrzeugsystem durchgeführt hat, um das Umfeldmodell zu erstellen.

In einer weiteren Ausgestaltung ist eine nicht-flüchtige Speichereinheit vorgesehen, wobei das Fahrzeugsystem dazu ausgebildet ist, bei Feststellung eines Triggersignals zumindest die Sensordaten und das generierte Referenzumfeldmodell und das generierte Umfeldmodell in der Speichereinheit zu speichern.

Durch diese Ausgestaltung wird verhindert, dass jedes generierte Umfeldmodell und jedes generierte Referenzumfeldmodell gespeichert wird. Dadurch wird zum einen Speicherkapazität als auch zum anderen sehr viel Bauraum eingespart.

Ferner kann dadurch direkt und schnell festgestellt werden, welche Situationen/Szenen problematisch sind, d.h. bei welchen Situationen/Szenen ein Wahrnehmungsfehler / kritische Situation vorliegt, wodurch wiederum die Auswertung wesentlich erleichtert wird und insbesondere zeitersparend ist.

Ferner kann das Fahrzeugsystem dazu ausgebildet sein, bei Feststellung eines Triggersignals, zusätzlich die historischen Sensordaten, in der nicht-flüchtigen Speichereinheit zu speichern. Diese werden dem Zwischenspeicher entnommen. Dadurch kann der Wahrnehmungsfehler/kritische Situation später detaillierter untersucht werden bzw. dessen Ursache.

In weiterer Ausgestaltung ist das Fahrzeugsystem dazu ausgebildet, bei Feststellung eines Triggersignals zusätzlich die dem Generierungsalgorithmus des Umfeldmodells zugrundeliegenden Algorithmenzustände zu speichern. Diese werden dem Zwischenspeicher entnommen. Dadurch kann eine verbesserte Analyse des fehlerhaften Umfeldmodells im Nachhinein, d.h. offline vorgenommen werden.

In weiterer Ausgestaltung weist der Ringpuffer eine feste Speichergröße auf, so dass die ältesten Inhalte überschrieben werden, wenn der Ringpuffer voll ist. Dadurch kann eine kleinere Speichergröße verwendet werden; was wiederum Bauraum im Fahrzeug und Kosten einspart.

In weiterer Ausgestaltung sind Referenzsensoren, zur Aufnahme von Referenzsensordaten über die vorab festgelegte Gedächtnislänge vorgesehen, wobei das Fahrzeugsystem dazu ausgebildet ist, das Referenzumfeldmodell anhand der Referenzsensordaten und der Sensordaten zu generieren. Solche Referenzsensoren erweitern die Wahrnehmungskapazitäten des Referenzumfeldmodells; es kann ein gesicherteres realitätsnahes Referenzumfeldmodell erstellt werden.

Dadurch hat das Fahrzeugsystem bei der Erstellung des Referenzumfeldmodells nicht nur einen tatsächlichen Wissensvorsprung darüber wie das zukünftige Umfeld in der Realität aussieht, sondern auch eine verbesserte Sensorik und damit mehrere Sensordaten durch das Vorhandensein von Zusatzsensoren.

Ferner kann das Fahrzeugsystem dazu ausgebildet sein, auch die historischen Referenzsensordaten in dem Ringpuffer zu speichern.

Ferner ist eine nicht-flüchtige Speichereinheit vorgesehen, wobei das Fahrzeugsystem dazu ausgebildet ist, bei Feststellung eines Triggersignals zumindest die Sensordaten und das generierte Referenzumfeldmodell und das generierte Umfeldmodell sowie die historischen Referenzsensordaten in der nicht-flüchtigen Speichereinheit zu speichern.

Dadurch kann beispielsweise die Ursache des Wahrnehmungsfehlers besser erkannt und differenziert werden.

Vorzugsweise ist das Fahrzeugsystem dazu ausgebildet, das Umfeldmodell anhand von Online-Schätzern in Echtzeit oder nahezu in Echtzeit zu bilden. Dies können beispielsweise sequentielle Onlineschätzer sein, welche das Umfeldmodell anhand von den Sensordaten und den historischen Sensordaten schätzen, beispielsweise anhand von Objektnachführung und Trackingbildung. Dadurch kann ein schnelles Umfeldmodell erstellt werden.

In weiterer Ausführungsform ist ein Rechnersystem vorgesehen, wobei das Fahrzeugsystem dazu ausgebildet ist, das Referenzumfeldmodell auf dem Rechnersystem zu generieren. Somit kann die Berechnung des Referenzumfeldmodells mit mehr Rechenkapazität durchgeführt werden, wodurch das Referenzumfeldmodell wahrheitsgetreuer werden kann als das Umfeldmodell. Überlegene Rechenkapazität ermöglicht es, das Referenzumfeldmodell beispielsweise anhand größerer künstlicher neuronaler Netze zu generieren, und mehr Hypothesen zu generieren und zu überprüfen, sowie mehr Faktoren in feinerer Auflösung in Betracht zu ziehen etc.

Somit können auch Objektexistenzhypothesen gezielt generiert und geprüft werden.

In vorzugsweiser Ausgestaltung kann das Fahrzeugsystem dazu ausgebildet sein, das Referenzumfeldmodell anhand von globalen Optimierungsmethoden und/oder Methoden der rückwirkenden Modellierung und/oder rückwirkenden Korrektur offline zu generieren. In weiterer Ausgestaltung ist das Fahrzeugsystem dazu ausgebildet, das Referenzumfeldmodell iterativ in mehreren Arbeitsschritten zu generieren.

Die unterschiedliche algorithmische Generierung von dem Umfeldmodell und dem Referenzumfeldmodell minimiert zusätzlich die Wahrscheinlichkeit identischer Fehlerbilder in beiden Modellen und somit auch den Anteil undetektierter Wahrnehmungsfehler.

Vorzugsweise nutzt das Fahrzeugsystem Multi-Pass Ansätze (iteratives Vorgehen mit mehr als zwei Durchläufe) bei denen nicht alle Umgebungseigenschaften gleichzeitig geschätzt werden müssen, sondern bei denen die Daten in mehreren Durchgängen verarbeitet werden, um zum Beispiel Kartierung von Objekterkennung zu trennen oder um die Schätzung iterativ zu verfeinern und ein geometrisch konsistentes Modell zu erstellen. Dadurch ergibt sich ein verbessertes/genaueres Referenzumfeldmodell.

In weiterer Ausgestaltung umfasst das Triggersystem mehrere vordefinierte Regeln, wobei das Triggersystem dazu ausgebildet ist, bei einem Erfüllen dieser Regeln ein Ereignis anzunehmen. Solche Regeln können beispielsweise sein:
- Passieren einer stark frequentierten oder gefährlichen Kreuzung. Dies kann mittels GPS -Daten ermittelt werden.
- Eingriff eines Sicherheitsfahrers,
- eine Notbremsung oder Vollbremsung,
- Fahren mit oder über eine vordefinierte Geschwindigkeit.

Dadurch lässt sich sehr einfach ein Ereignis feststellen.

Ferner wird die Aufgabe gelöst durch ein Fahrzeug mit einem wie oben beschriebenen Fahrzeugsystem. Insbesondere ist das Fahrzeug dazu ausgestaltet, autonom zu fahren und ein für den autonomen Betrieb notwendiges Sensorsystem aufzuweisen.

Ferner wird die Aufgabe gelöst durch ein Verfahren zur Fehlererkennung in einem Umfeldmodell eines Fahrzeugs mit den Schritten :
- Generierung von Umfeldmodellen durch das Fahrzeugsystem, anhand von einem Sensorsystem aufgenommenen Sensordaten während der Fahrt des Fahrzeugs,
- Bereitstellen eines Triggersystems zum Auslösen eines Triggersignals bei einem vorab definierten Ereignis,
- Aufnehmen von Sensordaten zumindest anhand des Sensorsystems über eine vorab festgelegte Gedächtnislänge,
- Speichern zumindest der über die vorab festgelegte Gedächtnislänge aufgenommenen Sensordaten in einem Ringpuffer,
- rückwirkende Generierung eines Referenzumfeldmodells anhand der über die vorab festgelegte Gedächtnislänge aufgenommenen Sensordaten, so dass bei der Generierung des Referenzumfeldmodells die über die vorab festgelegte Gedächtnislänge aufgenommenen Sensordaten rückwirkend miteinfließen,
- Durchführen eines Vergleichs zwischen dem zurückwirkenden Referenzumfeldmodell und dem korrespondierenden zurückliegenden Umfeldmodell, zur Feststellung von Wahrnehmungsfehlern in dem Umfeldmodell, und
- zumindest bei einer Abweichung zwischen dem zurückwirkenden Referenzumfeldmodell und dem korrespondierenden zurückliegenden Umfeldmodell als Ereignis auslösen eines Triggersignals durch das Triggersystem.

Die Vorteile des Fahrzeugsystems können auch auf das Verfahren übertragen werden.

Weitere Eigenschaften und Vorteile der vorliegenden Erfindung ergeben sich aus der nachfolgenden Beschreibung unter Bezugnahme auf die beiliegenden Figuren. Darin zeigen schematisch:
FIG 1: schematisch die Arbeitsweise eines erfindungsgemäßen Fahrzeugsystems ohne Triggersignal,
FIG 2: schematisch die Arbeitsweise des erfindungsgemäßen Fahrzeugsystems mit Triggersignal,
FIG 3: ein Beispiel eines Umfeldmodells, eines Referenzumfeldmodells und eines Wahrnehmungsfehlers.

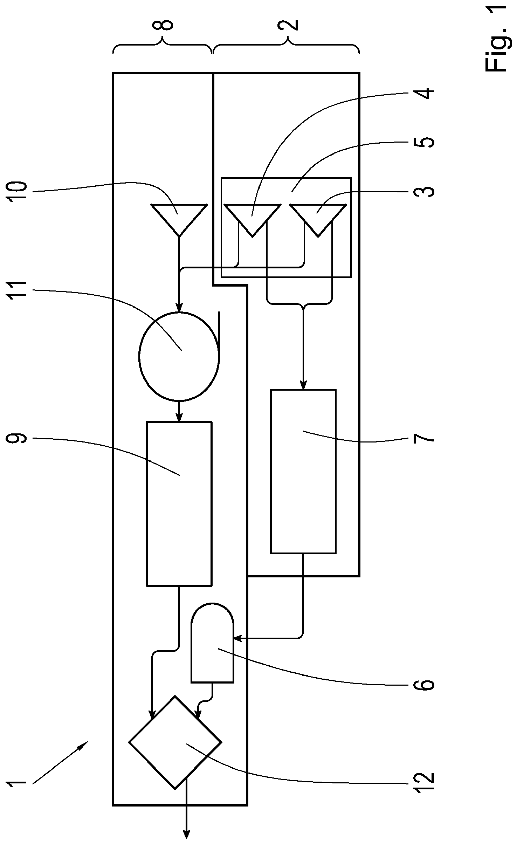

FIG 1 zeigt die Arbeitsweise eines erfindungsgemäßen Fahrzeugsystems 1 ohne Triggersignal. Dieses weist quasi einen ersten Strang 2 auf, zur Bildung des Umfeldmodells 7.

Der erste Strang 2 weist ein Sensorsystem 5 auf, welches hier aus einem ersten Nutzsensor 3, beispielsweise einem Radarsensor und einem zweiten Nutzsensor 4, beispielsweise einem Lidarsensor besteht. Auch können mehrere Sensoren vorgesehen sein, welche auf gleichen und/oder unterschiedlichen Messprinzipien beruhen. Das Sensorsystem 5 nimmt Sensordaten des Umfelds des Fahrzeugs auf.

Ferner weist der erste Strang 2 noch eine als Serienhardware laufende Nutzsoftware auf, sowie Komponenten für Planung und Regelung.

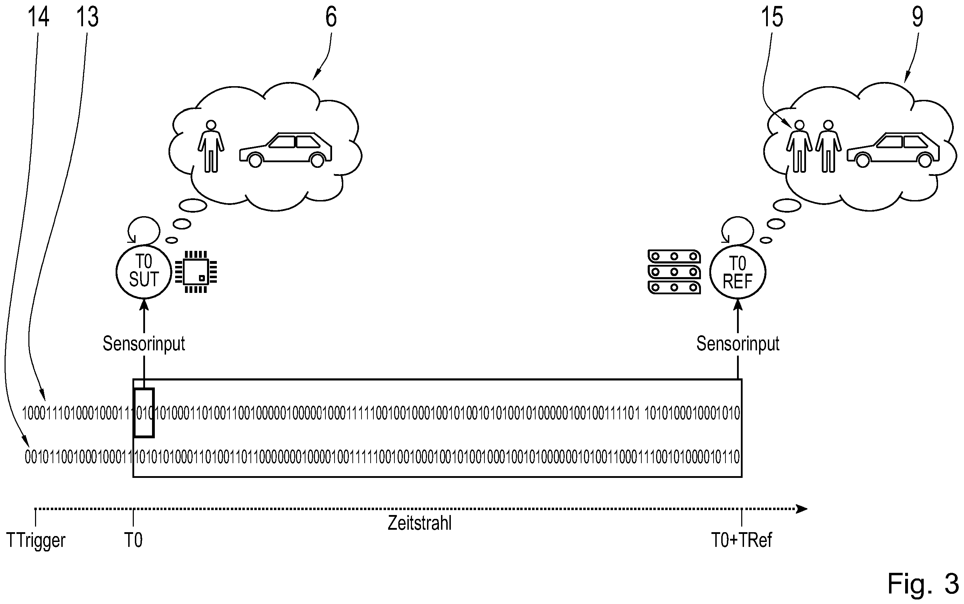

Das Fahrzeugsystem 1 kann mit den Sensordaten und der Software ein Umfeldmodell 7 in Echtzeit, also online für einen Zeitpunkt T0 (FIG 3) schätzen.

Dies bedeutet, dass das Fahrzeugsystem 1 zum jetzigen Zeitpunkt (T0) auf Basis der Nutzsensoren 3,4 und seiner eigenen vorherigen Zustände, den historischen Sensordaten 13 (FIG 3), ein Umfeldmodell 7 schätzt.

Dabei können als historische Sensordaten 13 (FIG 3) diejenigen Sensordaten verstanden werden, welche zur Erzeugung des Umfeldmodells 7 aufgenommen wurden, oder welche zur Umfeldmodellierung benötigt werden (Objektnachverfolgung etc.).

Historische Sensordaten 13 (FIG 3) können Informationen zu dem Umfeld umfassen, die während vorangegangener Messungen bestimmt wurden. Diese Historien der Messwerte des ersten Nutzsensor 3 und zweiten Nutzsensors 4 werden zur Erzeugung des aktuellen Umfeldmodells 7 zum Zeitpunkt T0 über einen vorbestimmten Zeitraum hinweg gespeichert.

Der Zeithorizont, in welchen die unverarbeiteten Sensordaten 13 (FIG 3) als historische Sensordaten 13 (FIG 3) aufgezeichnet werden, wird als Gedächtnislänge TTrigger (FIG 3) bezeichnet.

Der zur Generierung des Umfeldmodells 7 zugrundeliegende Algorithmus ist dabei vorzugsweise ein sequentieller Onlineschätzer, welcher beispielsweise auf Objektnachführung und Trackingbildung beruht.

Somit schätzt das Fahrzeugsystem 1 zum jetzigen Zeitpunkt T0(FIG 3) auf Basis der Nutzsensoren 3,4 und seiner eigenen vorherigen historischen Zustände (historische Sensordaten 13, (FIG 3)) das Umfeldmodell 7.

Vorzugsweise basiert die Umfeldmodellbildung auf anderen algorithmischen Methoden als die später beschriebene Referenzumfeldmodellbildung. Die unterschiedlichen algorithmischen Methoden minimieren zusätzlich die Wahrscheinlichkeit identischer Fehlerbilder in beiden Modellen und somit auch den Anteil undetektierter Wahrnehmungsfehler.

Zudem erfolgt die Bildung des Umfeldmodells 7 in Echtzeit oder nahezu in Echtzeit um eine Steuerung des Fahrzeugs bewältigen zu können.

Das Umfeldmodell 7 wird nun für eine vorgegebene Dauer, hier mit TRef (FIG 3) bezeichnet, in einem Zwischenspeicher 6 aufbewahrt. Dies entspricht einer zeitlichen Verzögerung.

Ferner werden die historischen Sensordaten 13 (Historiendaten), welche zur Erzeugung des Umfeldmodells 7 benötigt werden, in einem Zwischenspeicher 6 gespeichert.

Die historischen Sensordaten 13 (FIG 3) werden ebenfalls für die Zeitdauer TRef (FIG 3) im Zwischenspeicher 6 aufbewahrt.

Ferner werden Algorithmenzustände in dem Zwischenspeicher 6 gespeichert.

Dabei können unter Algorithmenzustände, der Algorithmus und die Parameter und Berechnungsschritte verstanden werden, welche das Fahrzeugsystem 1 durchgeführt hat, um das Umfeldmodell 7 zu erstellen. Dadurch kann bei einem später festgestelltem Wahrnehmungsfehler besser nachvollzogen werden, welche Ursache dem Wahrnehmungsfehler zugrunde liegt.

Diese Algorithmenzustände werden ebenfalls für die Zeitdauer TRef (FIG 3) in dem Zwischenspeicher 6 gespeichert.

Der Zwischenspeicher 6 kann dabei als ein Ringpuffer mit geringer Speicherkapazität ausgebildet sein.

Ferner weist das Fahrzeugsystem 1 einen zweiten Strang 8 auf, den Referenzstrang auf, zur Bildung des Referenzumfeldmodells 9.

Ferner weist das Fahrzeugsystem 1 noch einen oder mehrere Referenzsensoren 10 auf. Die Referenzsensoren 10 erweitern die Wahrnehmungskapazitäten des Referenzumfeldmodells 9.

Das Fahrzeugsystem 1 hat zur Bildung des Referenzumfeldmodells 9 anhand eines Referenzalgorithmus somit Zugriff auf alle Nutzsensordaten durch die Nutzsensoren 3,4 und Referenzsensordaten durch die Referenzsensoren 10.

Ferner ist ein Ringpuffer 11 vorgesehen, zum Speichern der Nutzsensordaten und der Referenzsensordaten zum Zeitpunkt T0 (FIG 3), sowie während einer Gedächtnislänge TRef (FIG 3). Die Gedächtnislänge ist identisch mit der Zeitdauer, TRef in welcher die Daten vom Umfeldmodell 7 in dem Zwischenspeicher 6 aufbewahrt werden, d.h. die Dauer der zeitlichen Verzögerung.

Ferner können ebenfalls die Algorithmenzustände als auch die historischen Referenzsensordaten 14 (FIG 3) in dem Ringpuffer 11 gespeichert werden.

Das Fahrzeugsystem 1 hat somit auf alle Nutzsensordaten und Referenzsensordaten, welche in dem Ringpuffer 11 der Länge TRef gehalten werden, Zugriff und kann über diese Zeitdauer das Referenzumfeldmodell 9 rückwirkend zum Zeitpunkt T0 berechnen. Dieses Referenzumfeldmodell 9 wird daher rückwirkend zu dem Zeitpunkt T0 (FIG 3) gebildet.

Das bedeutet, dass das Fahrzeugsystem 1 zu einem späteren Zeitpunkt T0 + TRef (FIG 3) rückblickend ein Referenzumfeldmodell 9 für den Zeitpunkt T0 (FIG 3) erstellt.

Dieses ist somit realitätsgetreuer als jenes Umfeldmodell 7, welches das Fahrzeugsystem 1 zum Zeitpunkt T0 anhand von den Sensordaten und historischen Sensordaten 13 (FIG 3) der Nutzsensoren 3,4 schätzt.

Während der seit T0 vergangenen Zeit TRef können zum Beispiel Mehrdeutigkeiten aufgelöst werden, die Dimensionen von teilweise vermessenen Hindernissen korrekter gemessen werden oder Klassenzuordnungen getroffen werden etc.

Ein Wert für TRef (FIG 3) ist beispielsweise ein Wert zwischen 30 Sekunden und 2 Minuten.

Dieser erfüllt die Zeitdauer, die für die Erstellung des realitätsnahen Referenzumfeldmodells 9 benötigt wird, ohne dass ein zu großer Ringpuffer 11 und Zwischenspeicher 6 benötigt wird.

Durch die Zeitdauer TRef (FIG 3) hat das Referenzumfeldmodell 9 also nicht nur bessere Sensorik, sondern einen tatsächlichen Wissensvorsprung darüber wie das zukünftige Umfeld in Realität aussehen wird.

Während TRef (FIG 3) verstreicht, kann das Fahrzeugsystem 1 das Referenzumfeldmodell 9 zum Zeitpunkt T0 (FIG 3) basierend auf den Nutz- und Referenzsensordaten im Ringpuffer 11 und auf seinen eigenen vorherigen Zuständen, sowie den historischen Referenzsensordaten 14 (FIG 3) kontinuierlich verbessern.

Ferner ist vorzugsweise das Fahrzeugsystem 1 mit einem weiteren, zusätzlichen Rechnersystem ausgestattet, auf welchem das Referenzumfeldmodell 9 berechnet werden kann. Dadurch kann das Referenzumfeldmodell 9 anhand höherer Rechenkapazität ermittelt werden.

Dadurch kann das Referenzumfeldmodell 9 wahrheitsgetreuer berechnet werden, als dies mittels der Rechenkapazität, die zur Erstellung des Umfeldmodells 7 zur Verfügung steht, der Fall ist.

So kann die Serienhardware eines autonomen Fahrzeugs zwar sehr leistungsfähig sein, wird aber für gewöhnlich durch ein mitgeführtes Rechnersystem übertroffen. Überlegene Rechenkapazität ermöglicht es somit, das Referenzumfeldmodell 9 beispielsweise anhand größerer künstlicher neuronaler Netze zu generieren, mehr Hypothesen zu generieren und zu überprüfen, mehr Faktoren in feinerer Auflösung in Betracht zu ziehen etc.

Dadurch wird das Referenzumfeldmodell 9 in seiner Wahrnehmung genauer.

Durch die höhere Rechenkapazität und die längere Aufnahme der Sensordaten während der Dauer TRef (FIG 3) kann das Referenzumfeldmodell 9 auf anderen algorithmischen Methoden aufgebaut werden, als das Umfeldmodell 7, welches in Echtzeit generiert wird.

Das Fahrzeugsystem 1 kann somit das Referenzumfeldmodell 9 anhand optimaler Methoden, anstelle von sequentiellen Onlineschätzern ermitteln. Ferner können zeitlich ungerichtete Methoden verwendet werden, bei denen eine spätere Messung in das Referenzumfeldmodell 9, welches den früheren Zeitpunkt T0 (FIG 3) repräsentiert, miteinfließen.

Zudem können durch höhere Rechenkapazität und mehrere Sensordaten Objektexistenzhypothesen gezielt geprüft werden und rückwirkend korrigiert werden, sowie multi-pass Ansätze genutzt werden, bei denen nicht alle Umgebungseigenschaften gleichzeitig geschätzt werden müssen, sondern bei denen die Daten in mehreren Durchgängen verarbeitet werden. Dadurch kann zum Beispiel eine Kartierung von Objekterkennung getrennt werden oder eine Schätzung iterativ verfeinert werden und ein geometrisch konsistentes Modell erstellt werden etc.

Durch die unterschiedlichen Algorithmen auf den das Umfeldmodell 7 und das Referenzumfeldmodell 9 basiert, kann zusätzlich die Wahrscheinlichkeit identischer Fehlerbilder in dem Umfeldmodell 7 und dem Referenzumfeldmodell 9 und somit auch der Anteil undetektierter Wahrnehmungsfehler in dem Umfeldmodell 7 und dem Referenzumfeldmodell 9 minimiert werden.

Ferner weist das Fahrzeugsystem 1 eine Logik 12 auf, mit der das generierte Umfeldmodell 7 und das Referenzumfeldmodell 9 nach Verstreichen der Zeitdauer TRef (FIG 3) verglichen/abgeglichen werden.

Wird durch ein Triggersystem kein Tiggersignal, beispielsweise durch eine vorhandene Abweichung, ausgelöst, so werden die Daten aus dem Ringpuffer 11 und dem Zwischenspeicher 6 gelöscht, bzw. durch nachkommende Daten überschrieben.

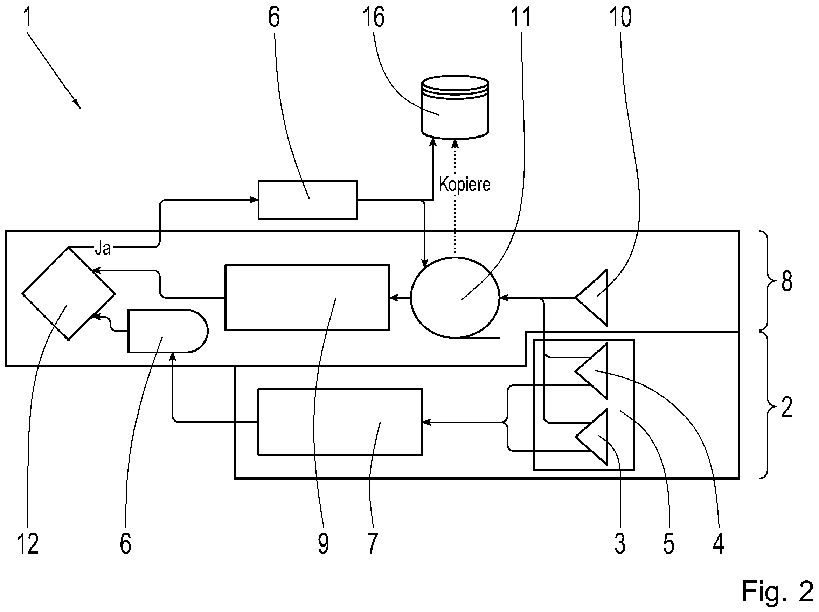

FIG 2 zeigt die Arbeitsweise eines erfindungsgemäßen Fahrzeugsystems 1 mit Triggersignal.

Dabei umfasst das Fahrzeugsystem 1 ebenfalls den ersten Strang 2 zur Bildung des Umfeldmodells 7. Der erste Strang 2 weist das Sensorsystem 5 mit dem ersten Nutzsensor 3 und dem zweiten Nutzsensor 4 auf zur Aufnahme von Sensordaten des Umfelds des Fahrzeugs.

Das Fahrzeugsystem 1 schätzt mit den Sensordaten und der Software ein Umfeldmodell in Echtzeit, zu einem Zeitpunkt T0.

Ferner weist das Fahrzeugsystem 1 den zweiten Strang 8 auf, den Referenzstrang auf, zur Bildung des Referenzumfeldmodells 9.

Ferner weist das Fahrzeugsystem 1 noch die einen oder mehrere Referenzsensoren 10 auf. Das Fahrzeugsystem 1 hat zur Bildung des Referenzumfeldmodells 9 anhand eines Referenzalgorithmus somit Zugriff auf alle Nutzsensordaten durch die Nutzsensoren 3,4 und Referenzsensordaten durch die Referenzsensoren 10.

Ferner ist der Ringpuffer 11 vorgesehen, zum Speichern der Nutzsensordaten und der Referenzsensordaten zum Zeitpunkt T0 (FIG 3), sowie während einer Gedächtnislänge TRef (FIG 3). Ferner können ebenfalls die Algorithmenzustände als auch die historischen Referenzsensordaten 14 (FIG 3) in dem Ringpuffer 11 gespeichert werden.

Das Fahrzeugsystem 1 hat somit auf alle Nutzsensordaten und Referenzsensordaten, welche in dem Ringpuffer 11 der Länge TRef gehalten werden, Zugriff und kann über diese Zeitdauer das Referenzumfeldmodell 9 rückwirkend zum Zeitpunkt T0 berechnen. Dieses Referenzumfeldmodell 9 wird daher rückwirkend zu dem Zeitpunkt T0 (FIG 3) gebildet.

Ferner ist vorzugsweise das Fahrzeugsystem 1 mit einem weiteren, zusätzlichen Rechnersystem ausgestattet, auf welchem das Referenzumfeldmodell 9 berechnet werden kann.

Das Fahrzeugsystem 1 kann somit das Referenzumfeldmodell 9 anhand optimaler Methoden, anstelle von sequentiellen Onlineschätzern ermitteln.

Ferner weist das Fahrzeugsystem 1 die Logik 12 auf, mit der das generierte Umfeldmodell 7 und das Referenzumfeldmodell 9 nach Verstreichen der Zeitdauer TRef (FIG 3) verglichen/abgeglichen werden.

Ferner verfügt das Fahrzeugsystem 1 über das Triggersystem. Das Triggersystem erzeugt bei einem Eintritt eines Ereignisses ein Triggersignal.

Wird bei diesem Vergleich eine kritische Abweichung, also ein Wahrnehmungsfehler in dem Umfeldmodell 7 erkannt, wird ein Triggersignal ausgelöst.

Weitere Triggersignale können beispielsweise bei Eintritt eines Ereignisses ausgelöst werden. Solche Ereignisse können beispielsweise anhand einem Erfüllen von vordefinierten Regeln definiert werden. Solche Regeln können beispielsweise sein:
- Passieren einer stark frequentierten oder gefährlichen Kreuzung. Dies kann mittels GPS -Daten ermittelt werden.
- Eingriff eines vorhandenen Sicherheitsfahrers,
- eine Notbremsung oder Vollbremsung,
- Fahren mit oder über eine vordefinierte Geschwindigkeit,
- Viele Fahrspuren, welche beispielsweise durch ein Navigationssystem festgestellt werden können,
- **Starker Verkehr etc...**

Dadurch lässt sich sehr einfach ein Ereignis feststellen.

Wird bei diesem Vergleich beispielsweise eine kritische Abweichung, also ein Wahrnehmungsfehler in dem Umfeldmodell 7 erkannt, oder wegen eines anderen Ereignisses das Triggersignal ausgelöst, so wird der Inhalt des Ringpuffers 11 und des Zwischenspeichers 6 (6Copy) in einer nicht-flüchtigen persistenten Speichereinheit 16 gespeichert.

Das Triggersignal löst damit eine zusätzliche Aufzeichnung der Sensordaten der Nutzsensoren 3,4 aus.

Dieser erkannte Fehler kann zur Verbesserung des Umfeldmodells 7 später herangezogen werden.

Dabei ist der Inhalt des Ringpuffers 11 das Referenzumfeldmodell 9, die historischen Referenzsensordaten 14 (FIG 3) und die Referenzsensordaten bezogen auf das Referenzumfeldmodell 9.

Dabei ist der Inhalt des Zwischenspeichers 6 das Umfeldmodell 7, die Sensordaten, die historischen Sensordaten 13 (FIG 3) und die Algorithmenzustände bezogen auf das Umfeldmodell 7.

Durch das erfindungsgemäße Fahrzeugsystem 1 können erstellte Umfeldmodelle 7 gegen sehr realitätsgetreue Referenzumfeldmodelle 9 abgeglichen werden und sehr viele Wahrnehmungsfehler erkannt werden.

Das erfindungsgemäße Fahrzeugsystem 1 erlaubt die automatische Erstellung eines solchen Referenzumfeldmodells 9 im Fahrzeug sowie die Detektion und nachfolgende Aufzeichnung von Wahrnehmungsfehlern des Umfeldmodells 7.

FIG 3 zeigt ein Beispiel eines Umfeldmodells 7 eines Referenzumfeldmodell 9 und eines Wahrnehmungsfehlers.

Das Fahrzeugsystem 1 schätzt das Umfeldmodell 7 in Echtzeit, also online für einen Zeitpunkt T0. Dazu verwendet das Fahrzeugsystem 1 Online- Schätzer.

Die Schätzung wird anhand von aktuellen Nutzsensordaten, welche durch die Nutzsensoren 3,4 generiert werden und anhand von historischen (Nutz) Sensordaten 13 generiert.

Der Zeithorizont, der um das, später ausgelöste, Triggersignal herum liegt und in welchen die unverarbeiteten Sensordaten als historische Sensordaten 13 aufgezeichnet werden, wird als TTrigger bezeichnet.

Die historischen (Nutz) Sensordaten 13, die aktuellen Nutzsensordaten und die Parameter und Berechnungen, welche für die Generierung des Umfeldmodells 7 zum Zeitpunkt T0 (Algorithmenzustände) notwendig waren, werden für die Zeitdauer TRef in dem Zwischenspeicher 6 aufbewahrt.

Ferner wird durch das Fahrzeugsystem 1 das Referenzumfeldmodell 9 zum Zeitpunkt T0 gebildet. Dazu wird über eine Zeitdauer TRef die Nutzsensordaten aus den Nutzsensoren 3,4 und die Referenzsensordaten aus Referenzsensoren 10 aufgenommen und in einem Ringpuffer 11 gespeichert. Ferner werden noch die historischen Referenzsensordaten 14 gespeichert.

Der Zeithorizont, der um das Triggersignal herum liegt und in welchen die unverarbeiteten Referenzsensordaten als historische Referenzsensordaten 14 aufgezeichnet werden, ist ebenfalls die Zeitdauer TTrigger.

Anhand dieser Daten wird das Referenzumfeldmodell 9 zum Zeitpunkt T0 rückwirkend gebildet. Dies bedeutet, dass das Fahrzeugsystem 1 zu einem späteren Zeitpunkt T0 + TRef rückblickend das Referenzumfeldmodell 9 für den Zeitpunkt T0 erstellen kann.

Dieses ist realitätsgetreuer als das Umfeldmodell 7, welches das Fahrzeugsystem 1 zum Zeitpunkt T0 schätzen muss. In der seit T0 vergangenen Zeit können zum Beispiel Mehrdeutigkeiten aufgelöst werden, die Dimensionen von teilweise vermessenen Hindernissen korrekter gemessen werden oder Klassenzuordnungen getroffen werden etc.

Anhand der Logik 12 wird das Referenzumfeldmodell 9 und das Umfeldmodell 7 verglichen.

Der Vergleich ergibt hier als einen Wahrnehmungsfehler einen übersehenen Fußgänger 15. Dadurch wird ein Triggersignal durch das Triggersystem ausgelöst.

Das Referenzumfeldmodell 9 wird somit nicht nur anhand der besseren Sensorik generiert, sondern weist einen tatsächlichen Wissensvorsprung darüber auf wie das unmittelbar zukünftige Fahrzeugumfeld aussehen wird.

Dabei kann das Fahrzeugsystem 1 vorzugsweise Referenzsensoren 10 aufweisen, muss jedoch keine aufweisen. Durch den Vergleich zwischen dem Umfeldmodell 7, welches anhand von Online-Schätzern zum Zeitpunkt T0 bestimmt wird und einem Referenzumfeldmodell, welches anhand von denselben Nutzsensordaten, welche über die Zeitdauer TREf aufgezeichnet und im Ringpuffer 11 gespeichert worden sind, können ebenfalls Wahrnehmungsfehler sehr gut erkannt werden.

### Bezugszeichen

- 1: Fahrzeugsystem
- 2: erster Strang
- 3: erster Nutzsensor
- 4: zweiter Nutzsensor
- 5: Sensorsystem
- 6: Zwischenspeicher
- 7: Umfeldmodell
- 8: zweiter Strang
- 9: Referenzumfeldmodell
- 10: Referenzsensoren
- 11: Ringpuffer
- 12: Logik
- 13: historische Sensordaten
- 14: historische Referenzsensordaten
- 15: übersehener Fußgänger
- 16: Speichereinheit

## Patentansprüche

1. Fahrzeugsystem (1) zur Fehlererkennung in einem Umfeldmodell (7) eines Fahrzeugs **gekennzeichnet, durch**:
ein Sensorsystem (5) zur Generierung von Umfeldmodellen (7) durch das Fahrzeugsystem (1), anhand der von dem Sensorsystem (5) aufgenommenen Sensordaten während der Fahrt des Fahrzeugs,
ein Triggersystem, welches konfiguriert ist bei einem vorab definierten Ereignis ein Triggersignal auszulösen,
ein Ringpuffer (11), wobei das Fahrzeugsystem (1) dazu ausgebildet ist, zumindest anhand des Sensorsystems (5) über eine vorab festgelegte Gedächtnislänge die Sensordaten aufzunehmen, und die über die vorab festgelegte Gedächtnislänge aufgenommenen Sensordaten in dem Ringpuffer (11) zu speichern,
wobei das Fahrzeugsystem (1) dazu ausgebildet ist, rückwirkend ein Referenzumfeldmodell (9) anhand der über die vorab festgelegte Gedächtnislänge aufgenommenen Sensordaten zu generieren, wobei bei der Generierung des Referenzumfeldmodells (9), die über die vorab festgelegte Gedächtnislänge aufgenommenen Sensordaten rückwirkend miteinfließen,
wobei das Fahrzeugsystem (1) dazu ausgebildet ist, einen Vergleich zwischen dem zurückwirkenden Referenzumfeldmodell (9) und dem korrespondierenden zurückliegenden Umfeldmodell (7) durchzuführen, zur Feststellung von Wahrnehmungsfehlern in dem Umfeldmodell (7) und
wobei das Triggersystem dazu ausgebildet ist, ein Triggersignal zumindest bei einer Abweichung zwischen dem zurückwirkenden Referenzumfeldmodell (9) und dem korrespondierenden zurückliegenden Umfeldmodell (7) als Ereignis auszulösen.

2. Fahrzeugsystem (1) nach Anspruch 1, **dadurch gekennzeichnet, dass** ein Zwischenspeicher (6) vorgesehen ist, und das Fahrzeugsystem (1) dazu ausgebildet ist, das generierte Umfeldmodell (7) bis zur Feststellung oder Nicht- Feststellung eines Wahrnehmungsfehlers in dem Zwischenspeicher (6) zwischenzuspeichern.

3. Fahrzeugsystem (1) nach Anspruch 2, **dadurch gekennzeichnet, dass** das Fahrzeugsystem (1) dazu ausgebildet ist, zusätzlich die historischen Sensordaten (13), welche zur Erzeugung des Umfeldmodells (7) benötigt werden, in dem Zwischenspeicher (6) zu speichern und wobei das Fahrzeugsystem (1) dazu ausgebildet ist, das Umfeldmodell (7) anhand eines Generierungsalgorithmus zu generieren und das Fahrzeugsystem (1) ferner dazu ausgebildet ist, die dem Generierungsalgorithmus zugrundeliegenden Algorithmenzustände in dem Zwischenspeicher (6) zu speichern.

4. Fahrzeugsystem (1) nach Anspruch 3, **dadurch gekennzeichnet, dass** eine nicht-flüchtige Speichereinheit (16) vorgesehen ist und das Fahrzeugsystem (1) dazu ausgebildet ist, bei Feststellung eines Triggersignals zumindest die Sensordaten und das generierte Referenzumfeldmodell (9) und das generierte Umfeldmodell (7) in der nicht-flüchtigen Speichereinheit (16) zu speichern.

5. Fahrzeugsystem (1) nach Anspruch 4, **dadurch gekennzeichnet, dass** das Fahrzeugsystem (1) dazu ausgebildet ist, bei Feststellung eines Triggersignals zusätzlich die historischen Sensordaten (13) zu speichern.

6. Fahrzeugsystem (1) nach Anspruch 4 oder 5, **dadurch gekennzeichnet, dass** das Fahrzeugsystem (1) dazu ausgebildet ist, bei Feststellung eines Triggersignals zusätzlich die dem Generierungsalgorithmus des Umfeldmodells (7) zugrundeliegenden Algorithmenzustände zu speichern.

7. Fahrzeugsystem (1) nach einem der vorhergehenden Ansprüche, **dadurch gekennzeichnet, dass** Referenzsensoren (10) zur Aufnahme von Referenzsensordaten über die vorab festgelegte Gedächtnislänge vorgesehen sind, wobei das Fahrzeugsystem (1) dazu ausgebildet ist, das Referenzumfeldmodell (9) anhand der Referenzsensordaten und der Sensordaten zu generieren.

8. Fahrzeugsystem (1) nach Anspruch 7, **dadurch gekennzeichnet, dass** das Fahrzeugsystem (1) dazu ausgebildet ist, auch historische Referenzsensordaten (14) in dem Ringpuffer (11) zu speichern.

9. Fahrzeugsystem (1) nach Anspruch 8, **dadurch gekennzeichnet, dass** eine nicht-flüchtige Speichereinheit (16) vorgesehen ist und das Fahrzeugsystem (1) dazu ausgebildet ist, bei Feststellung Triggersignals zumindest die Sensordaten und das generierte Referenzumfeldmodell (9) und das generierte Umfeldmodell (7) sowie die historischen Referenzsensordaten in der nicht-flüchtigen Speichereinheit (16) zu speichern.

10. Fahrzeugsystem (1) nach einem der vorhergehenden Ansprüche, **dadurch gekennzeichnet, dass** das Fahrzeugsystem (1) dazu ausgebildet ist, das Umfeldmodell (7) anhand von Online-Schätzern in Echtzeit oder nahezu in Echtzeit zu bilden.

11. Fahrzeugsystem (1) nach einem der vorhergehenden Ansprüche, **dadurch gekennzeichnet, dass** ein Rechnersystem vorgesehen ist und das Fahrzeugsystem (1) dazu ausgebildet ist, das Referenzumfeldmodell (9) auf dem Rechnersystem zu generieren.

12. Fahrzeugsystem (1) nach einem der vorhergehenden Ansprüche, **dadurch gekennzeichnet, dass** das Fahrzeugsystem (1) dazu ausgebildet ist, das Referenzumfeldmodell (9) anhand von globalen Optimierungsmethoden und/oder Methoden der rückwirkenden Modellierung und/oder rückwirkenden Korrektur offline zu generieren.

13. Fahrzeugsystem (1) nach einem der vorhergehenden Ansprüche, **dadurch gekennzeichnet, dass** das Triggersystem mehrere vordefinierte Regeln umfasst, wobei das Triggersystem dazu ausgebildet ist, bei Erfüllen dieser Regeln ein Ereignis anzunehmen.

14. Fahrzeug mit einem Fahrzeugsystem (1) nach einem der vorhergehenden Ansprüche.

15. Verfahren zur Fehlererkennung in einem Umfeldmodell (7) eines Fahrzeugs **gekennzeichnet durch** die Schritte :
- Generierung von Umfeldmodellen (7) durch das Fahrzeugsystem (1), anhand von einem Sensorsystem (5) aufgenommenen Sensordaten während der Fahrt des Fahrzeugs,
- Bereitstellen eines Triggersystems zum Auslösen eines Triggersignals bei einem vorab definierten Ereignis,
- Aufnehmen von Sensordaten zumindest anhand des Sensorsystems (5) über eine vorab festgelegte Gedächtnislänge,
- Speichern zumindest der über die vorab festgelegte Gedächtnislänge aufgenommenen Sensordaten in einem Ringpuffer (11),
- rückwirkende Generierung eines Referenzumfeldmodells (9) anhand der über die vorab festgelegte Gedächtnislänge aufgenommenen Sensordaten, so dass bei der Generierung des Referenzumfeldmodells (9) die über die vorab festgelegte Gedächtnislänge aufgenommenen Sensordaten rückwirkend miteinfließen,
- Durchführen eines Vergleichs zwischen dem zurückwirkenden Referenzumfeldmodell (9) und dem korrespondierenden zurückliegenden Umfeldmodell (7), zur Feststellung von Wahrnehmungsfehlern in dem Umfeldmodell (7), und
- zumindest bei einer Abweichung zwischen dem zurückwirkenden Referenzumfeldmodell (11) und dem korrespondierenden zurückliegenden Umfeldmodell (11) als Ereignis auslösen eines Triggersignals durch das Triggersystem.
